(19) Europäisches Patentamt European Patent Office Office européen des brevets

(11) **EP 4 391 560 A1**

(12) **EUROPEAN PATENT APPLICATION**
published in accordance with Art. 153(4) EPC

(43) Date of publication:
26.06.2024 Bulletin 2024/26

(21) Application number: 22925684.7

(22) Date of filing: 15.11.2022

(51) International Patent Classification (IPC):
*H04N 21/44* (2011.01)

(52) Cooperative Patent Classification (CPC):
H04N 19/132; G06V 10/26; G06V 10/7715;
G06V 20/40; H04N 19/124; H04N 19/167;
H04N 19/17

(86) International application number:
PCT/CN2022/131919

(87) International publication number:
WO 2023/151333 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.02.2022 CN 202210118524

(71) Applicant: Tencent Technology (Shenzhen)
Company Limited
Shenzhen, Guangdong, 518057 (CN)

(72) Inventors:
• ZHAO, Yuanyuan
  Shenzhen, Guangdong 518057 (CN)
• REN, Jingjing
  Shenzhen, Guangdong 518057 (CN)
• LI, Chen
  Shenzhen, Guangdong 518057 (CN)

(74) Representative: AWA Sweden AB
Box 45086
104 30 Stockholm (SE)

(54) **VIDEO PROCESSING METHOD AND APPARATUS, DEVICE AND STORAGE MEDIUM**

(57) The present application relates to the technical field of video processing. Disclosed are a video processing method and apparatus, a device and a storage medium. The method comprises: inputting a video to be processed and a video mask into a coding model for feature extraction to obtain a first video feature vector and a second video feature vector (202); determining an index distribution of a first quantized feature vector in a discrete latent space formed on the basis of the first quantized feature vector (204); determining a second quantized feature vector in the discrete latent space on the basis of the second video feature vector and the index distribution (206); and inputting the first quantized feature vector and the second quantized feature vector into a decoding model to obtain a reconstructed video (208).

FIG. 2

**Description**

CROSS-REFERENCE TO RELATED APPLICATIONS

This disclosure claims priority to Chinese Patent Application No. 2022101185245, filed with the China National Intellectual Property Administration on February 8, 2022, and entitled "VIDEO PROCESSING METHOD AND APPARATUS, DEVICE, AND STORAGE MEDIUM".

FIELD OF THE TECHNOLOGY

This disclosure relates to the field of video processing technologies, and in particular, to a video processing method and apparatus, a device, and a storage medium.

BACKGROUND OF THE DISCLOSURE

With the popularization of mobile terminals and the optimization of networks, posting and playing videos have gradually become one of ways of entertainment. When users edit and create videos, it is necessary to remove certain characters or items that appear in the videos and fill in the background, to protect the privacy in the videos or keep the videos beautiful.

In related technologies, effective information between related frames is integrated in a way of integrating timing structures, thereby filling incomplete regions of a video with the effective information in the related frames. However, when the video is filled in the way of integrating the timing structures, there is often a problem of poor filling effect.

SUMMARY

According to various embodiments provided in this disclosure, a video processing method and apparatus, a device, and a storage medium are provided.

According to one aspect of this disclosure, a video processing method is provided, executable by a computer device and including:

determining a target video and a video mask, the video mask being used for masking the target video to obtain a masked region in an image frame of the target video;

extracting, from the image frame of the target video and the video mask, a plurality of first video feature vectors corresponding to an unmasked region and a second video feature vector corresponding to the masked region in the image frame;

obtaining, from a video codebook, first quantization feature vectors corresponding to each of the plurality of the first video feature vectors;

determining a second quantization feature vector based on the second video feature vector and the first quantization feature vectors, the second quantization feature vector being used for filling content in the masked region; and

transforming the first quantization feature vectors and the second quantization feature vector to obtain a reconstructed image frame of the target video.

According to another aspect of this disclosure, a video processing apparatus is provided, including:

a feature extraction module, configured to: determine a target video and a video mask, the video mask being used for masking the target video to obtain a masked region in an image frame of the target video; extract, from the image frame of the target video and the video mask, a plurality of first video feature vectors corresponding to an unmasked region and a second video feature vector corresponding to the masked region in the image frame;

a quantization module, configured to: obtain, from a video codebook, first quantization feature vectors corresponding to each of the plurality of the first video feature vectors;

a prediction module, configured to determine a second quantization feature vector based on the second video feature vector and the first quantization feature vectors, the second quantization feature vector being used for filling content in the masked region; and

a decoding module, configured to transform the first quantization feature vectors and the second quantization feature vector to obtain a reconstructed image frame of the target video.

According to another aspect of this disclosure, a computer device is provided. The computer device includes a memory and a processor. The memory stores computer-readable instructions, and the processor executes the computer-readable instructions to implement the steps of the above video processing method.

According to another aspect of this disclosure, a non-transitory computer-readable storage medium is provided. The computer-readable storage medium stores computer-readable instructions, and the computer-readable instructions, when being executed by a processor, implement the steps of the above video processing method.

According to another aspect of this disclosure, a computer program product is provided. The computer program product includes computer-readable instructions. The computer-readable instructions, when being executed by a processor, implement the steps of the above video processing method. Details of one or more embodiments of this disclosure are provided in the accompanying drawings and descriptions below. Other features, objectives, and advantages of this disclosure become apparent from the specification, the drawings, and the claims.

BRIEF DESCRIPTION OF THE DRAWINGS

To describe the technical solutions in the embodiments of this disclosure or the related technology more clearly, the following briefly describes the accompanying drawings required for describing the embodiments or the related technology. Apparently, the accompanying drawings in the following descriptions show merely the embodiments of this disclosure, and a person of ordinary skill in the art may still derive other drawings from these accompanying drawings without creative efforts.

FIG. 1 is a schematic diagram of a computer system architecture of a video processing method according to an exemplary embodiment of this disclosure.

FIG. 2 is a flowchart of a video processing method according to one exemplary embodiment of this disclosure.

FIG. 3 is a flowchart of a video processing method provided by an exemplary embodiment of this disclosure.

FIG. 4 is a structural block diagram of a video processing method provided by an exemplary embodiment of this disclosure.

FIG. 5 is a schematic diagram of a video processing method provided by one exemplary embodiment of this disclosure.

FIG. 6 is a flowchart of a video processing method provided by an exemplary embodiment of this disclosure.

FIG. 7 is a structural block diagram of a video processing method provided by an exemplary embodiment of this disclosure.

FIG. 8 is a structural block diagram of a video processing method provided by an exemplary embodiment of this disclosure.

FIG. 9 is a structural block diagram of a video processing apparatus provided by an exemplary embodiment of this disclosure.

FIG. 10 is a structural block diagram of a computer device provided by an exemplary embodiment of this disclosure.

The accompanying drawings here are incorporated into the specification and form a part of the specification, demonstrating the embodiments that comply with this disclosure and used together with the specification to explain the principles of this disclosure.

DESCRIPTION OF EMBODIMENTS

The technical schemes in the embodiments of this disclosure will be clearly and completely described below with reference to the drawings in the embodiments of this disclosure, and it is obvious that the described embodiments are only a part of the embodiments of this disclosure, but not all of them. Based on the embodiments in this disclosure, all other embodiments obtained by those of ordinary skill in the art without creative work all fall within the protection scope of this disclosure.

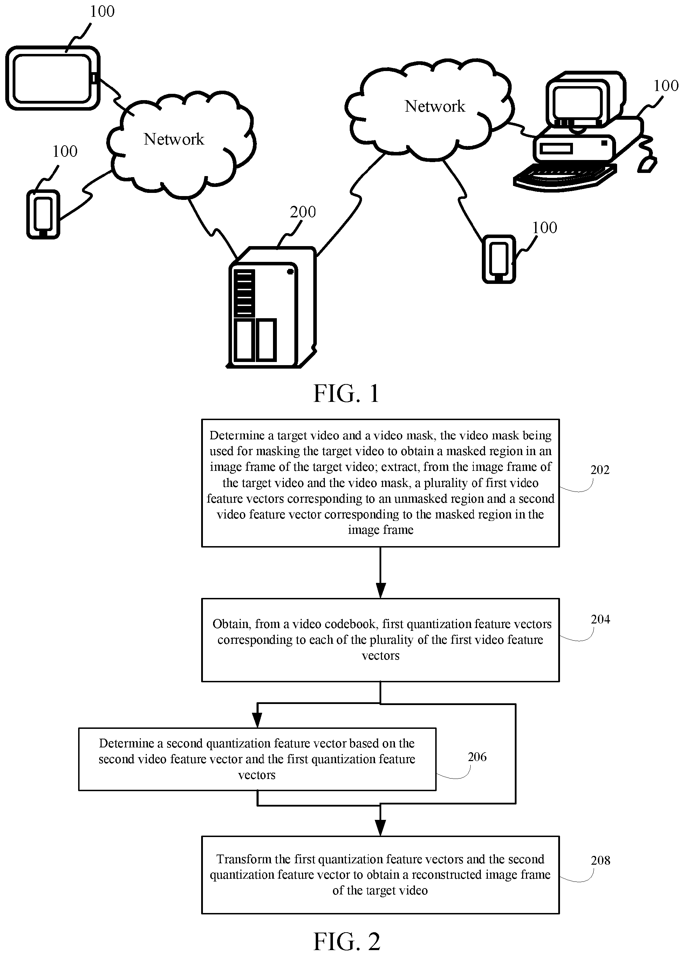

FIG. 1 shows an architecture of a computer system of a video processing method according to an embodiment of this disclosure. The computer system may include: a terminal 100 and a server 200.

The terminal 100 can be an electronic device such as a mobile phone, a tablet computer, a vehicle-mounted terminal (vehicle-mounted machine), a wearable device, a personal computer (PC), an intelligent voice interaction device, a smart home appliance, a vehicle-mounted terminal, an aircraft, and a vending machine. The terminal 100 can install a client that runs a target application. The target application can be an application that supports picture capturing or other applications that provide a picture capturing function. This disclosure does not limit this. In addition, this disclosure does not limit the form of the target application, including but not limited to applications (apps), mini programs, and the like installed in the terminal 100, and can also be in the form of web pages.

The server 200 may be an independent physical server, a server cluster composed of a plurality of physical servers, or a distributed system, or may be a cloud server that provides cloud computing services. The server 200 may be a background server of the above target application, and is configured to provide background services for the client of the target application.

The terminal 100 communicates with the server 200 by using a network, for example, a wired or wireless network.

For a video processing method provided in this embodiment of this disclosure, an executive body of all steps may be a computer device. The computer device refers to an electronic device with data computing, processing, and storage capabilities. An implementation environment shown in FIG. 1 is taken as an example. The video processing method can be executed by the terminal 100 (for example, the video processing method is implemented by a client of a target application installed and run in terminal 100), or can be executed by the server 200, or can be alternately executed by the terminal 100 and the server 200. This disclosure does not limit this.

FIG. 2 shows a flowchart of a video processing method provided in an exemplary embodiment of this disclosure. The method may be implemented by a computer device. The computer device may be the terminal 100 or the server 200 in FIG. 1. The video processing method may include the following steps:

Step 202: Determine a target video and a video mask, the video mask being used for masking the target video to obtain a masked region in an image frame of the target video; extract, from the image frame of the target video and the video mask, a plurality of first video feature vectors corresponding to an unmasked region and a second video feature vector corresponding to the masked region in the image frame.

In the embodiments of the present disclosure including the embodiments of both the claims and the specification (hereinafter referred to as "all embodiments of the present disclosure"), the target video may refer to a video needing to be filled. The video mask is used for masking the target video to obtain a masked region. The video mask may be used to perform masking processing on an image region needing to be filled in the target video, thereby changing the image region needing to be filled into the masked region. The masking processing may be understood as shielding pixels. The masked region may refer to an image region wherein pixels are shielded. The image region needing to be filled may include an image content needing to be removed or blocked. A target included in the image content can be random. For example, it may include a person or an item in the target video. This embodiment of this disclosure does not limit this. Correspondingly, an unmasked region may be an unmasked image region in the target video, and the unmasked image region does not need to be filled.

In all embodiments of the present disclosure, an encoding model refers to a trained encoding model that can be used for extracting feature vectors of the target video and the video mask. In an embodiment, a transformer may include the encoding model and a decoding model used below. The transformer may be a deep learning model and uses a self-attention mechanism to weight each part of the input data with different importance. The encoding model may include N encoders connected in series, and an output of one encoder is an input of the subsequent encoder. Each encoder may include a multi-head attention layer and a feedforward network layer.

After obtaining the target video and the video mask, the computer device inputs the target video and the video mask to the encoding model for feature extraction and obtains the first video feature vectors and the second video feature vector based on the target video and the video mask. When extracting video feature vectors, the video mask is used to identify the masked region, and the pixels in the masked region are different from the original pixels in the image frame before masking. The plurality of second video feature vectors respectively correspond to the pixels in the masked region.

In all embodiments of the present disclosure, the first video feature vector refers to a feature vector corresponding to the unmasked region. The second video feature vector refers to a feature vector corresponding to the masked region. In specific implementation, the unmasked region includes a plurality of pixels. Each pixel corresponds to a first video feature vector, and different pixels may correspond to different first video feature vectors. The masked region also includes a plurality of pixels. The pixels of the masked region have the same function, which are used for image blocking. These pixels may correspond to the same second video feature vector.

Step 204: Obtain, from a video codebook, first quantization feature vectors corresponding to each of the plurality of the first video feature vectors.

In all embodiments of the present disclosure, a quantization feature vector refers to a feature vector corresponding to a quantized video feature, and may be obtained by performing quantization processing on the video feature.

In all embodiments of the present disclosure, the first quantization feature vector refers to a quantization feature vector corresponding to the first video feature vector of the target video. The first quantization feature vector may be obtained by performing quantization processing on the first video feature vector.

In this step, a discrete hidden space may be formed by linear combinations of the first quantization feature vectors. And an index distribution of the first quantization feature vectors may be determined in the discrete hidden space. The index distribution is used for indicating a position distribution of the first quantization feature vectors in the discrete hidden space. Since the first quantization feature vector is obtained by quantizing the first video feature vector, the index distribution may be used for indicating a position distribution of pixels in the unmasked region in the discrete hidden space.

Step 206: Determine a second quantization feature vector based on the second video feature vector and the first quantization feature vectors, the second quantization feature vector being used for filling content in the masked region.

In all embodiments of the present disclosure, the second quantization feature vector refers to a quantization feature vector used for filling content in the masked region.

The computer device may determine, according to the second video feature vector corresponding to the masked region of the target video and the position distribution of the first quantization feature vectors in the discrete hidden space, the second quantization feature vector used for filling the masked region. As a result, the second quantization feature vector may be one of the first quantization feature vectors, one of the quantization feature vectors in the discrete hidden space, or one of the quantization feature vectors in the video codebook.

Step 208: Transform the first quantization feature vectors and the second quantization feature vector to obtain a reconstructed image frame of the target video.

In all embodiments of the present disclosure, the reconstructed video refers to a video obtained by filling content in the masked region of the target video.

In all embodiments of the present disclosure, the decoding model is a trained decoding model and is used for transforming quantization feature vectors into a video form. The decoding model may include N decoders connected in series, and an output of one decoder is an input of the subsequent decoder. Each decoder may include a multi-head attention layer and a feedforward network layer.

Further, after obtaining the reconstructed video, the computer device may store the reconstructed video. In other embodiments, after obtaining the reconstructed video, the computer device may output the reconstructed video.

In summary, based on the solution shown in this embodiment of this disclosure, by determining a target video and a video mask, extracting, from the image frame of the target video and the video mask, a plurality of first video feature vectors corresponding to an unmasked region and a second video feature vector corresponding to the masked region in the image frame; obtaining, from a video codebook, first quantization feature vectors corresponding to each of the plurality of the first video feature vectors; determining, from the video codebook, a second quantization feature vector based on the second video feature vector and the first quantization feature vectors, and transforming the first quantization feature vectors and the second quantization feature vector to obtain a reconstructed image frame of the target video, the second quantization feature vector is determined the first quantization feature vectors corresponding to the unmasked region in the target video, which conforms to a representation of the target video. Therefore, the target video can be filled with a content that better matches the unmasked region, to obtain a natural and harmonious high-quality video, thereby improving the video filling effect. In addition, in this disclosure, the second quantization feature vector is obtained from the discrete hidden space for video filling, which reduces the difficulty of video filling implementation and improves the efficiency of video filling.

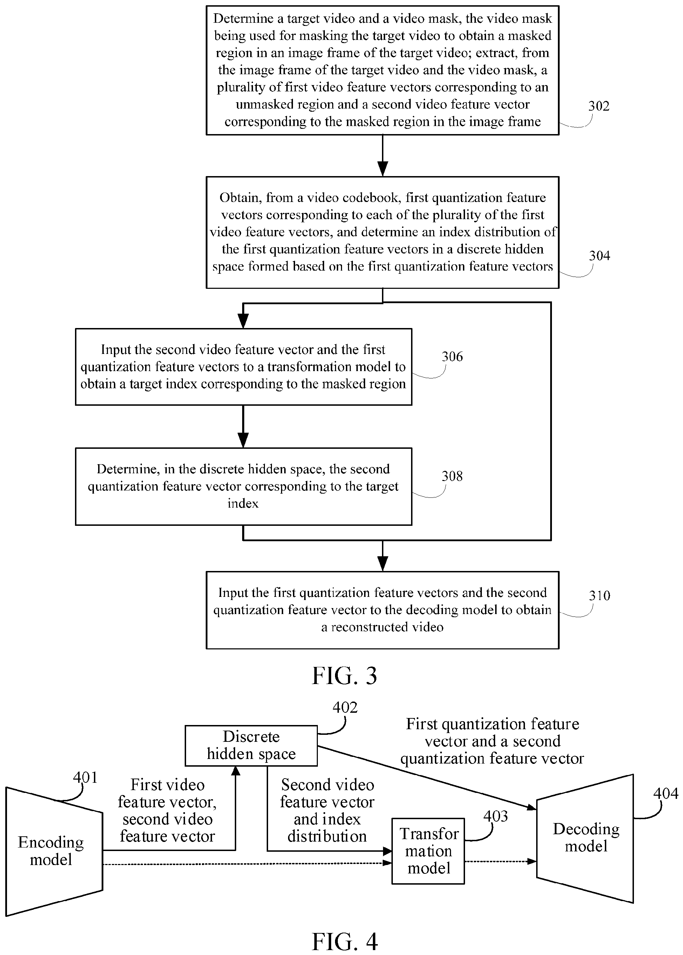

FIG. 3 is a flowchart of a video processing method provided by an exemplary embodiment of this disclosure. The method may be implemented by a computer device, and the computer device may be the terminal 100 or the server 200 in FIG. 1. Parts included in this embodiment that are the same as those in the previous embodiment can refer to the explanation in the previous embodiment. Specifically, the video processing method may include the following steps:

Step 302: Determine a target video and a video mask, the video mask being used for masking the target video to obtain a masked region in an image frame of the target video; extract, from the image frame of the target video and the video mask, a plurality of first video feature vectors corresponding to an unmasked region and a second video feature vector corresponding to the masked region in the image frame.

In an embodiment, the computer device inputs, to the encoding model for feature extraction, a masked video obtained after multiplying the target video with the video mask, and extracts, from the masked video, the first video feature vectors and the second video feature vector.

For example, the computer device inputs multiple image frames $x^{t-1}$, $x^t$, $x^{t+1}$ in the target video and corresponding video masks $m^{t-1}$, $m^t$, $m^{t+1}$ to the encoding model for feature extraction.

A formula for extracting the first video feature vector is:

$$f_{e1} = E\big(x \odot (1 - m)\big)$$

where $f_{e1}$ is the first video feature vector extracted by the encoding model; E is the encoding model; x is a current image frame in the target video; and m is a video mask corresponding to the current image frame in the target video; and $\odot$ represents element-by-element multiplication.

A formula for extracting the second video feature vector is:

$$f_{e2} = E(m)$$

where $f_{e2}$ is the second video feature vector extracted by the encoding model; E is the encoding model; and m is a video mask corresponding to the current image frame.

Step 304: Obtain, from a video codebook, first quantization feature vectors corresponding to each of the plurality of the first video feature vectors, and determine an index distribution of the first quantization feature vectors in a discrete hidden space formed based on the first quantization feature vectors.

In an embodiment, the computer device may determine, from a video codebook according to spatial position offsets between the first video feature vector and quantization feature vectors in the video codebook, a quantization feature vector having a distance value satisfying a distance condition to the first video feature vector as the first quantization feature vector. In an example, for each of the first video feature vectors, the computer device may determine distances between the each first video feature vector and each of quantization feature vectors included in the video codebook. The distance condition here refers to a condition used for limiting a distance between the first video feature vector and the first quantization feature vector. For example, the condition may be at least one of the following: a distance value is minimum or a distance value is less than a preset distance threshold. The video codebook includes the quantization feature vectors corresponding to a plurality of videos. In specific implementation, a quantization feature vector corresponding to a video may be a quantization feature vector corresponding to a pixel feature point in the video, that is, each pixel feature point may correspond to one quantization feature vector. The pixel feature point refer to a pixel having image features.

In all embodiments of the present disclosure, a discrete hidden space refers to a set of feature vectors including all the linear combinations of the first quantization feature vectors. The linear combinations include addition and multiplication.

In another embodiment, after the video codebook corresponding to the target video is determined, the discrete hidden space may be a hidden space composed of the quantization feature vectors in the video codebook.

For example, the video codebook $\varepsilon$ may be represented as:

$$\varepsilon = \left\{ e_k \epsilon R^d \,|\, k \epsilon \{1, 2, \cdots, k\} \right\}$$

where $e_k$ is a quantization feature vector; $R^d$ is a set of quantization feature vectors; and k is a quantity of the quantization feature vectors, and may be flexibly set according to a need, such as 10000.

Further, the computer device may determine spatial position offsets between any two of the first quantization feature vectors; determine a position distribution according to the spatial position offsets; generate, by using the transformation model, the plurality of index feature vectors according to the position distribution. The number of the index feature vectors may be the same as the number of quantization feature vectors included in the discrete hidden space.

In an embodiment, a formula for determining the first quantization feature vector may be:

$$\left(f_q\right)_i^t = arg \min_{e_k \in \varepsilon} ||(f_e)_i^t - e_k||$$

where $f_q$ is the first quantization feature vector; i is an index corresponding to the first quantization feature vector in the video codebook; t is a $t^{th}$ frame in the target video; and argmin is a value of a variable when a spatial position offset between the first video feature vector and the quantization feature vector in the video codebook reaches a minimum value.

Optionally, after the first video feature vectors are extracted from the target video and the index distribution of the first quantization feature vectors is determined, each image frame in the target video can be represented either by the first quantization feature vector $f_q$ or by the index of the first quantization feature vector $f_q$ in the discrete hidden space. In an example, the index distribution of the first quantization feature vectors refer to an index set including indexes of all the first quantization feature vectors obtained in the video codebook.

Step 306: Input the second video feature vector and the first quantization feature vectors to a transformation model to obtain a target index corresponding to the masked region.

In all embodiments of the present disclosure, the transformation model is a machine learning model used for determining an index corresponding to the masked region of the target video.

An index is used for representing a position of a quantization feature vector in the video codebook. A position of a second quantization feature corresponding to the masked region may be determined according to the target index.

In an embodiment, the computer device may input the second video feature vector and the index distribution to the transformation model to obtain the target index corresponding to the masked region.

In an embodiment, the computer device may input the first quantization feature vectors to the transformation model to obtain a plurality of index feature vectors; calculate a correlation value between the second video feature vector and each of the plurality of index feature vectors; and take an index corresponding to an index feature vector having a largest correlation value, as the target index.

In an embodiment, the index feature vectors may be transformed based on the index distribution by using the transformation model. For example, The index feature vector may be a feature vector obtained by transforming the index distribution through a self-attention mechanism layer in the transformation model. A larger correlation value indicates a higher possibility of using the quantization feature vector corresponding to the index as the second quantization feature vector. Therefore, in this embodiment, it can be understood that the second quantization feature vector is determined by classification, and each of candidate second quantization feature vectors can be considered as a category. The process of calculating the correlation value is a process of predicting a classification possibility of each category. In this way, the video filling is transformed into classification in the discrete hidden space, which lowers the difficulty of video completion and improves the filling efficiency.

For example, the computer device transforms the index distribution into a plurality of index feature vectors by using the self-attention mechanism layer in the transformation model, calculates a correlation value $s_i^t$ between the second video feature vector and the index feature vector transformed from the index distribution by using a prediction layer in the transformation model, then performs normalization using a softmax function to obtain a maximum correlation value $c_i^t$ between the second video feature vector and the first quantization feature vector in the discrete hidden space, and determines a target index corresponding to the masked region according to the maximum correlation value.

In an embodiment, a formula for determining the correlation value $s_i^t$ between the second video feature vector $f_{e2}$ and the index feature vectors transformed from the index distribution is:

$$s_i^t = \mathrm{P}(f_{e2}, \mathrm{MSA}(z))$$

where MSA is the self-attention mechanism layer in the transformation model; P is the prediction layer in the transformation model; and z is the index distribution.

A formula for determining the maximum correlation value $c_i^t$ is:

$$c_i^t = softmax(s_i^t)$$

A formula for determining the target index is:

$$z_i^t = \underset{k}{\mathrm{argmax}}(c_i^t)_k$$

wherein $z_i^t$ represents an index corresponding to an $i^{th}$ quantization feature vector in the $t^{th}$ frame; k is the quantity of the quantization feature vectors in the discrete hidden space; and $c_i^t$ is the maximum correlation value between the second video feature vector and the index feature vector transformed from the index distribution.

Step 308: Determine, in the discrete hidden space, the second quantization feature vector corresponding to the target index, the discrete hidden space includes linear combinations of the first quantization feature vectors.

The computer device determines, according to the target index, a position of a quantization feature vector corresponding to the target index, to determine, from the video codebook, a second quantization feature vector corresponding to the target index.

Step 310: Input the first quantization feature vectors and the second quantization feature vector to the decoding model to obtain a reconstructed video.

Exemplarily, the computer device inputs the first quantization feature vector and the second quantization feature vector to the decoding model, and fills the masked region of the target video using the second quantization feature vector to obtain a reconstructed video x'.

In an embodiment, as shown in FIG. 4, the computer device obtains a target video and a video mask, and the computer device inputs the target video and the video mask to an encoding model 401 for feature extraction to obtain a first video feature vectors and a second video feature vector. The computer device determines, according to the first video feature vectors, an index distribution of the first quantization feature vectors in a discrete hidden space 402 composed based on the first quantization feature vectors.

The computer device inputs the second video feature vector and the index distribution to a transformation model 403, and calculates, through the transformation model 403, a correlation value between the second video feature vector and an index feature vector transformed from the index distribution (or the position distribution). The computer device takes the index that is output by the transformation model and corresponds to the index feature vector having the largest correlation value as the target index. The computer device determines, according to the target index, a position of a quantization feature vector corresponding to the target index, to determine, from the discrete hidden space 402, a second quantization feature vector corresponding to the target index.

The computer device inputs the first quantization feature vectors and the second quantization feature vector to a decoding model 404, and fills the masked region of the target video using the second quantization feature vector to obtain a reconstructed video x'.

In an embodiment, before inputting the first quantization feature vectors and the second quantization feature vector to the decoding model, the computer device inputs the second quantization feature vector to a timing integration model, calculates a timing residual based on the second quantization feature vector and an second quantization feature vector of an adjacent image frame in the target video; updates the second quantization feature vector according to the timing residual to obtain an updated second quantization feature vector. The computer device inputs the updated second quantization feature vector and the first quantization feature vectors to a decoding model to obtain a reconstructed video. By utilizing a timing relationship between adjacent frames, the second quantization feature vector is updated, so that a filling content of a filled region between adjacent frames is smoother, thus making a filling result more coherent and natural. For example, the timing residual is equal to the difference between the second quantization feature vectors of adjacent image frames.

Further, after obtaining the reconstructed video, the computer device may save or output the reconstructed video.

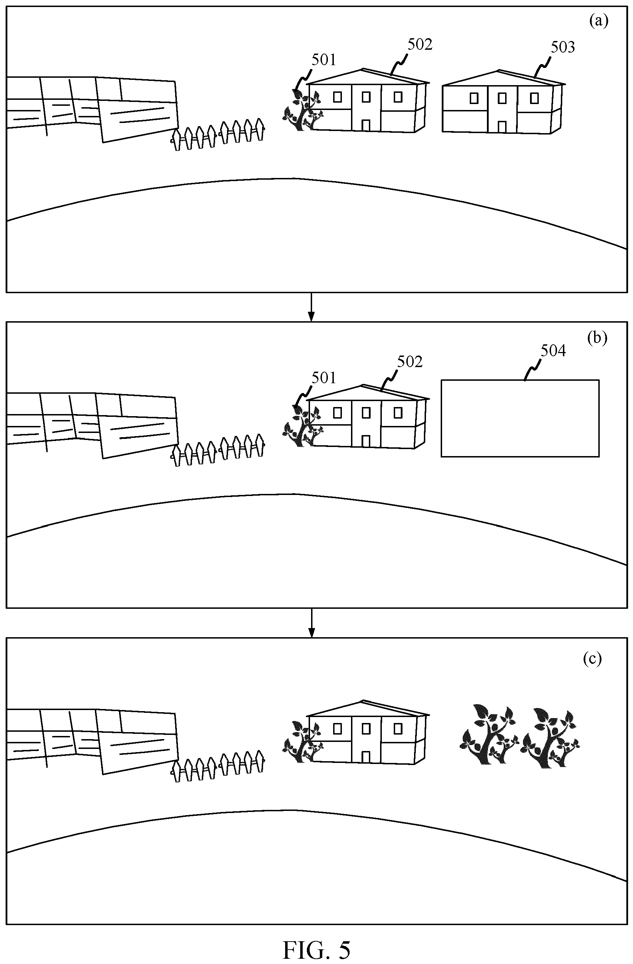

Exemplarily, as shown in FIG. 5, FIG. 5 shows a schematic diagram of video processing by a computer device. FIG. 5(a) shows an image frame in a target video. A virtual tree 501, a virtual hose 502, and a virtual house 503 in FIG. 5(a) are taken as an example. When it is necessary to eliminate the virtual house 503 in FIG. 5(a) and perform filling, the image frame as shown in FIG. 5(a) and a video mask are inputted to an encoding model for feature extraction, and first video feature vectors of corresponding positions of the virtual tree 501 and the virtual house 502 and a second video feature vector of a corresponding position of the virtual house 503 are obtained. The computer device obtains a first quantization feature vectors corresponding to the first video feature vectors of the target video, and determines an index distribution of the first quantization feature vectors in a discrete hidden space formed based on the first quantization feature vectors.

When inputting the obtained first video feature vectors and the second video feature vector to a decoding model, there are the virtual tree 501, the virtual hose 502 and a video-masked blank region 504 in FIG. 5(b), after the decoding model performs decoding.

When inputting the obtained index distribution and the second video feature vector to a transformation model, the transformation model calculates a correlation value between the second video feature vector and an index feature vector transformed from the index distribution. The computer device takes an index corresponding to the index feature vector having the largest correlation value as the target index. The computer device determines, from the discrete hidden space according to the target index, a position of a quantization feature vector corresponding to the target index, to determine, from the discrete hidden space, a second quantization feature vector corresponding to the target index. The discrete hidden space may refer to a vector space composed by linear combinations of all the first quantization feature vectors. The linear combinations include addition and multiplication.

For example, the transformation model calculates a correlation value between the second video feature vector of the corresponding position of the virtual house 503 and the index feature vector transformed from the index distribution, and determines the index corresponding to the index feature vector having the largest correlation value as the target index. The computer device determines, from the discrete hidden space according to the target index, that the second quantization feature vector corresponding to the target index is the virtual tree 501. The computer device inputs the first quantization feature vector and the second quantization feature vector to the decoding model, and completes the masked region of the target video using the second quantization feature vector to obtain a reconstructed video. That is, the computer device inputs the first quantization feature vectors corresponding to the virtual tree 501 and the virtual house 502, and the second quantization feature vector corresponding to the virtual house 503 to the decoding model, and fills the video-masked blank region 504 using the second quantization feature vector to obtain the reconstructed video, as shown in FIG. 5(c).

It can be understood that this embodiment of this disclosure can be applied to various scenarios such as a cloud technology, artificial intelligence, intelligent transportation, and assisted driving.

In summary, the solution shown in this embodiment of this disclosure obtains the first video feature vector and the second video feature vector by inputting the obtained target video and the video mask to the encoding model for feature extraction, and determines the index distribution of the first quantization feature vector in the discrete hidden space composed based on the first quantization feature vector; inputs the second video feature vector and the index distribution to the transformation model to obtain the target index corresponding to the masked region, and determines the second quantization feature vector in the discrete hidden space according to the target index; and inputs the first quantization feature vector and the second quantization feature vector to the decoding model to obtain the reconstructed video. Since the transformation model can be used to calculate the correlation value between the second video feature vector and the index feature vector transformed from the index distribution to obtain the target index corresponding to the masked region, the target index improves the efficiency of video filling.

The above embodiments have described a video processing process. Processes of determining the encoding model, the discrete hidden space, and the decoding model corresponding to the target video during the video processing will be further described below.

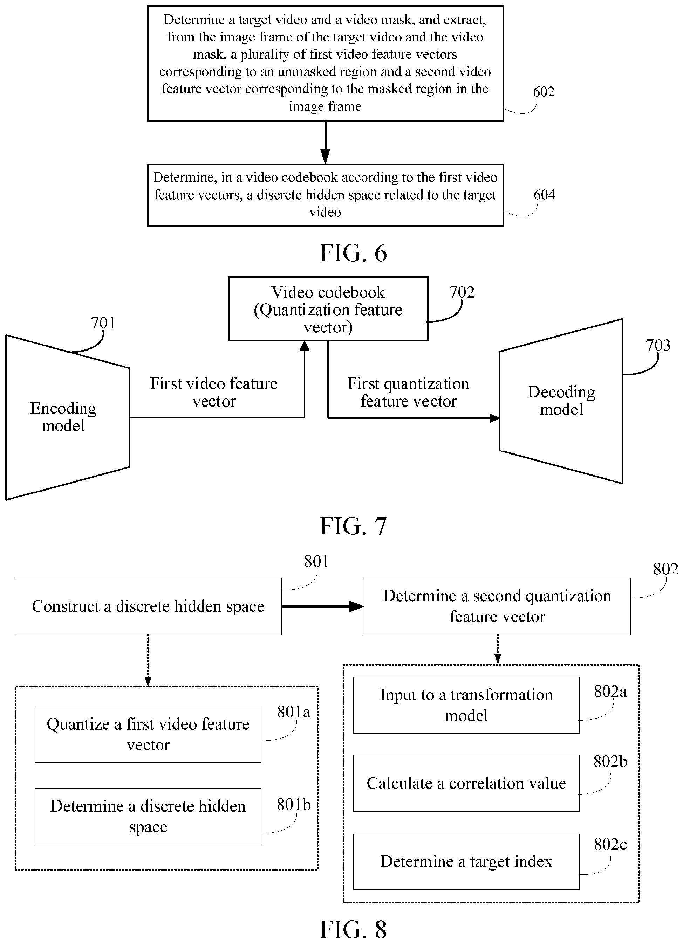

FIG. 6 is a flowchart of a video processing method provided by an exemplary embodiment of this disclosure. The method may be implemented by a computer device, and the computer device may be the terminal 100 or the server 200 in FIG. 1. Parts included in this embodiment that are the same as those in the previous embodiment can refer to the explanation in the previous embodiment. Specifically, the video processing method may include the following steps: Step 602: Determine a target video and a video mask, and extract, from the image frame of the target video and the video mask, a plurality of first video feature vectors corresponding to an unmasked region and a second video feature vector corresponding to the masked region in the image frame.

In an embodiment, the computer device inputs, to the encoding model for feature extraction, a masked video obtained after multiplying the target video with the video mask, and obtains the first video feature vectors and the second video feature vector.

Step 604: Determine, in a video codebook according to the first video feature vectors, a discrete hidden space related to the target video.

The video codebook includes a set of quantization feature vectors corresponding to a plurality of videos.

It can be understood that the video codebook may be obtained from a database that is public in a network, or corresponding quantization features are obtained by using videos public in the network, to construct the video codebook.

The computer device determines, from the video codebook according to spatial position offsets between each first video feature vector and the quantization feature vectors in the video codebook, a quantization feature vector having a distance value satisfying a distance condition to the first video feature vector, and takes a vector space composed by linear combinations of a set of first quantization feature vectors which have minimum distance values to the first video feature vectors as the discrete hidden space. The distance condition here refers to a condition used for limiting a distance to the first video feature vector. For example, the condition may be at least one of the following: a distance value is minimum or a distance value is less than a preset distance threshold.

In an embodiment, as shown in FIG. 7, the computer device obtains a target video and a video mask, and the computer device inputs a masked video obtained by multiplying the target video with the video mask to an encoding model 701 for feature extraction to obtain first video feature vectors. The computer device determines, from a video codebook 702 according to spatial position offsets between each first video feature vector and quantization feature vectors in the video codebook, a first quantization feature vector having a minimum distance value to the first video feature vector, and integrates the first quantization feature vectors having the minimum distance value to the first video feature vectors by linear combination to obtain a discrete hidden space. The computer device may further input the first quantization feature vectors to a decoding model 703 to obtain a video with the masked region not being filled.

In an embodiment, the computer device calculates a loss value of the encoding model based on the first video feature vectors and the second video feature vector. The computer device updates model parameters of the encoding model according to the loss value to obtain the encoding model corresponding to the target video. The model parameters of the encoding model may refer to parameters used in the multi-head attention layer and in the feedforward network layer of each encoder included in the encoding model.

In an embodiment, the computer device calculates a loss value of the decoding model based on the first quantization feature vectors and the second quantization feature vector, and updates model parameters of the decoding model according to the loss value to obtain the decoding model corresponding to the target video. The model parameters of the decoding model may refer to parameters used in the multi-head attention layer and in the feedforward network layer of each decoder included in the decoding model.

In an embodiment, the loss value of the encoding model and the loss value of the decoding model may be calculated as one value. For example, a formula for calculating the loss values $£_{vq}$ of the encoding model and the decoding model is:

$$£_{vq} = \frac{1}{n}\sum \|(x - x') \odot (1 - m)\|^2 + \gamma_1\|e_k - sg[E(x)]\| + \gamma_2\|E(x) - sg[e_k]\|$$

where sg represents a stop gradient backhaul; $\gamma_1$ and $\gamma_2$ represent weight values; n is a total number of pixels of an unmasked region in the target video; x is a video inputted to the encoding model; x' is a video outputted by the decoding model; m is a video mask; $e_k$ is the quantization feature vector, including the first quantization feature vector and the second quantization feature vector; and E(x) is the video feature vector, including the first video feature vector and the second video feature vector.

In summary, the video processing method provided in this embodiment of this disclosure obtains, based on the first quantization feature vector corresponding to the unmasked region, the discrete hidden space related to the target video from the video codebook, so that the discrete hidden space pays more attention to the target video. Therefore, when the quantization feature vectors are obtained from the discrete hidden space for filling, a filling content better matches the target video, and the video filling effect is better. In addition, by calculating the loss values of the encoding model and the decoding model, the computer device can update the model parameters of the encoding model and the decoding model according to the loss values, thereby obtaining the encoding model and decoding model corresponding to the target video, ensuring the accuracy of the encoding model and the decoding model and further improving the video filling effect. Since the quantization feature vector $e_k$ is obtained by using the video codebook, when updating the model parameters of the encoding model and the decoding model according to the loss values, the video codebook is updated to more adapt to the features of the current video.

FIG. 8 is a flowchart of a video processing method provided by an exemplary embodiment of this disclosure. The method may be implemented by a computer device, and the computer device may be the terminal 100 or the server 200 in FIG. 1. The flowchart of the video processing method may include the following steps:

Main steps of the video processing method include constructing a discrete hidden space 801 and determining a second quantization feature vector 802.

The constructing a discrete hidden space 801 includes quantizing a first video feature vector 801a and determining a discrete hidden space 801b.

The computer device obtains a target video and a video mask. The computer device inputs the target video and the video mask to an encoding model for feature extraction and obtains a first video feature vectors and a second video feature vector based on the target video and the video mask.

The computer device determines, from a video codebook according to spatial position offsets between each first video feature vector and quantization feature vectors in the video codebook, a first quantization feature vector having a minimum distance value relative to the first video feature vector to achieve quantization of the first video feature vector. The computer device integrates the first quantization feature vectors with linear combinations to obtain a discrete hidden space. The discrete hidden space includes any linear addition and/or multiplication of the first quantization feature vectors.

Specific descriptions of quantizing a first video feature vector 801a and determining a discrete hidden space 801b can refer to steps 602 and 604 of the aforementioned embodiments, and will not be repeated here.

The determining a second quantization feature vector 802 includes inputting to a transformation model 802a, calculating a correlation value 802b, and determining a target index 802c.

The computer device obtains a target video and a video mask. The computer device inputs the target video and the video mask to an encoding model for feature extraction and obtains a first video feature vectors and a second video feature vector based on the target video and the video mask.

The computer device determines, according to the first video feature vectors, an index distribution of the first quantization feature vectors in a discrete hidden space composed based on the first quantization feature vectors.

The computer device inputs the second video feature vector and the index distribution to a transformation model, and calculates a correlation value between the second video feature vector and each index feature vector transformed from the index distribution. The computer device takes an index corresponding to the index feature vector having the largest correlation value as the target index, thereby determining the target index 802c.

The computer device determines, according to the target index, a position of a quantization feature vector corresponding to the target index, to determine, from the discrete hidden space, a second quantization feature vector corresponding to the target index.

A specific description of the step of determining a second quantization feature vector 802 can refer to the descriptions of step 304 to step 308 of the aforementioned embodiments, and will not be repeated here.

The aforementioned embodiments have described a video processing process and the processes of determining the encoding model, the discrete hidden space, and the decoding model corresponding to the target video. The processes of determining the encoding model, the decoding model, and the transformation model will be further described below.

The computer device may obtain a target video sample, a video mask sample, and an incomplete-video sample, obtain a masked video sample based on the target video sample and the video mask sample, and input the masked video sample to the encoding model to extract first video feature vectors and a second video feature vector in a training process.

For each of the first video feature vectors in a training process, the computer device may determine, from a video codebook according to distances between the each first video feature vector in the training process and each of quantization feature vectors included in the video codebook, a first quantization feature vector having a minimum distance.

The computer device may input the first quantization feature vector to the decoding model for loop iteration to obtain an incomplete video. The incomplete video only includes part of the image corresponding to the first quantization feature vector(s). As shown in FIG. 5(c), the incomplete video only includes the virtual tree 501 and the virtual hose 502.

The computer device may calculate loss values of the encoding model and the decoding model, based on an error between the incomplete video and the incomplete-video sample, the first video feature vectors, and the first quantization feature vectors; adjust model parameters of the encoding model and the decoding model according to the calculated loss values, to obtain a trained encoding model and a trained decoding model.

In an embodiment, the computer device may obtain a target video sample, a video mask sample, and a reconstructed video sample, multiply the target video sample with the video mask sample to obtain a masked video sample, and extract, from the masked video sample, a first video feature vectors and a second video feature vector in a training process.

The computer device may obtain, from the video codebook, first quantization feature vectors corresponding to each of the plurality of first video feature vectors in the training process.

The computer device may input the second video feature vector and the first quantization feature vectors in the training process to a transformation model to obtain a target index corresponding to the masked region in the training process.

The computer device may determine, according to the target index in the training process, a second quantization feature vector corresponding to the target index in the training process.

The computer device may transform the obtained first quantization feature vectors and the second quantization feature vector to obtain a reconstructed video.

The computer device may calculate a loss value of the transformation model based on an error between the reconstructed video and the reconstructed video sample, the first video feature vectors and the first quantization feature vectors in the training process, and adjust model parameters of the transformation model according to the calculated loss value, to obtain a trained transformation model .

In one specific embodiment, a video processing method is provided. The method can be implemented by a computer device. The computer device can be the terminal 100 or the server 200 in FIG. 1. Parts included in this embodiment that are the same as those in the previous embodiment can refer to the explanation in the previous embodiment. Specifically, the video processing method may include the following steps:

1. For a plurality of to-be-processed images in a target video, the computer device multiplies these to-be-processed images with a video mask pixel by pixel to obtain masked images of the to-be-processed images. Image regions needing to be filled in the masked images are blocked to obtain masked regions, while the pixels in other regions, as unmasked regions, remain unchanged. The masked images are inputted to a trained encoding model for feature extraction, to obtain video feature maps of the to-be-processed images, and first video feature vectors corresponding to the unmasked regions and second video feature vectors corresponding to the masked regions may be obtained according to these video feature maps. For example, for pixels in an unmasked region, feature values of different color channels corresponding to the pixels are combined to form the first video feature vectors.

2. The computer device queries, from a video codebook, quantization feature vectors closest to the video feature vectors (including the first video feature vectors and the second video feature vectors) of the pixels in each video feature map. These quantization feature vectors form a discrete hidden space. A target codebook matched with the target video is reconstructed according to these quantization feature vectors. In the target codebook, correspondence between the quantization feature vectors and indexes are established.

3. The computer device constructs respective index maps of the various video feature maps according to the indexes of the various quantization feature vectors in the target codebook. An index map corresponding to a video feature map has the same size as the corresponding the video feature map, and values of pixel positions in the index map are the indexes at the same pixel positions in the corresponding video feature map.

In order to enable the transformation model to distinguish a masked region from an unmasked region, the quantization feature vectors corresponding to masked regions in the target codebook are unified to be one first quantization feature vector , so that the values corresponding to the masked regions in the index maps are fixed.

4. For a target video, the computer device inputs the video feature map and the index map to the trained transformation model, so that for each pixel position in the masked region, the transformation model can predict a correlation value between the second video feature vector and the index feature vectors in the target codebook. An index value with the largest correlation value is taken as a target index value of the pixel position, and the corresponding quantization feature vector can be queried from the target codebook according to the target index value, that is, a second quantization feature vector corresponding to the pixel position.

5. The computer device inputs the first quantization feature vectors and the second quantization feature vector to the decoding model. The decoding model can reconstruct the masked regions based on the first quantization feature vectors, and fill the masked regions based on the second quantization feature vector, so that a filled image frame is obtained. Finally, a reconstructed video can be obtained based on all filled image frames.

It is understood that although the steps in the flowcharts of the various embodiments mentioned above are displayed in sequence according to the instructions of the arrows, these steps are not necessarily performed in sequence according to the sequence indicated by the arrows. Unless otherwise explicitly specified in this disclosure, execution of the steps is not strictly limited, and the steps may be performed in other sequences. Moreover, at least some of the steps in the flowcharts of the various embodiments may include a plurality of steps or a plurality of stages. These steps or stages are not necessarily performed at the same moment but may be performed at different moments. Execution of these steps or stages is not necessarily performed in sequence, but may be performed in turn or alternately with other steps or at least some of steps or stages of other steps.

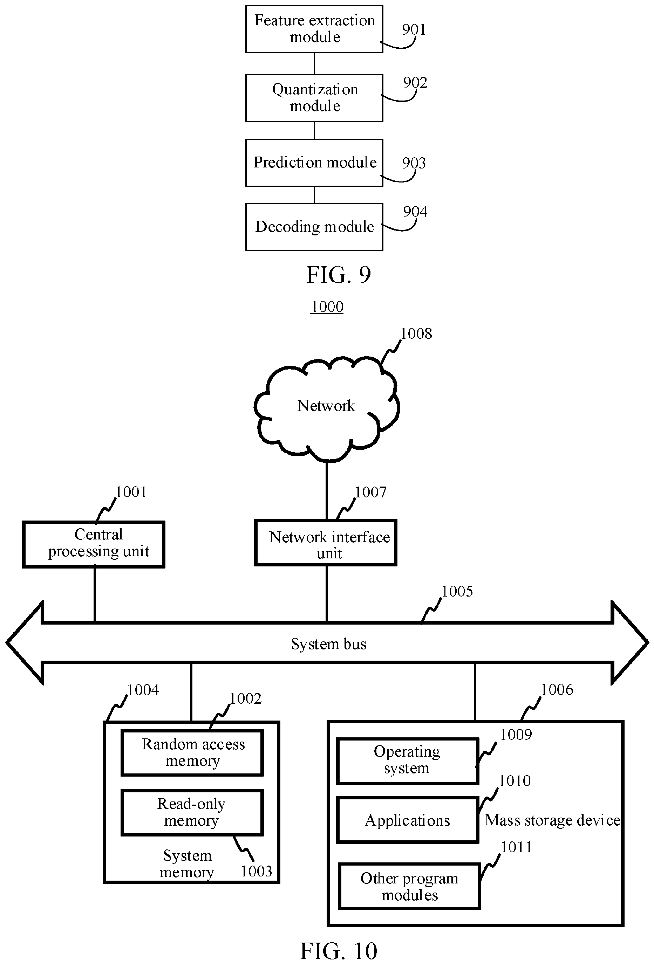

FIG. 9 is a block diagram of a video processing apparatus provided by an exemplary embodiment of this disclosure. As shown in FIG. 9, the video processing apparatus includes:

a feature extraction module 901, configured to: determine a target video and a video mask, the video mask being used for masking the target video to obtain a masked region in an image frame of the target video; extract, from the image frame of the target video and the video mask, a plurality of first video feature vectors corresponding to an unmasked region and a second video feature vector corresponding to the masked region in the image frame;

a quantization module 902, configured to: obtain, from a video codebook, first quantization feature vectors corresponding to each of the plurality of the first video feature vectors;

a prediction module 903, configured to determine a second quantization feature vector based on the second video feature vector and the first quantization feature vectors, the second quantization feature vector being used for filling content in the masked region; and

a decoding module 904, configured to transform the first quantization feature vectors and the second quantization feature vector to obtain a reconstructed image frame of the target video.

In summary, the solution shown in this embodiment of this disclosure obtains the first video feature vectors and the second video feature vector by inputting the obtained target video and the video mask to the encoding model for feature extraction, and determines the index distribution of the first quantization feature vectors in the discrete hidden space composed based on the first quantization feature vector. The computer device determines the second quantization feature vector in the discrete hidden space based on the second video feature vector and the index distribution, and inputs the first quantization feature vectors and the second quantization feature vector to the decoding model to obtain the reconstructed video. The second quantization feature vector is determined from the discrete hidden space, and the discrete hidden space is composed of the first quantization feature vectors corresponding to the unmasked region in the target video, which conforms to representation of the target video. Therefore, the target video can be filled with a content that better matches the unmasked region, to obtain a natural and harmonious high-quality video, thereby improving the video filling effect. In addition, in this disclosure, the second quantization feature vector is obtained from the discrete hidden space for video filling, which reduces the difficulty of video filling implementation and improves the efficiency of video filling.

In an embodiment, the prediction module 903 is further configured to input the second video feature vector and the first quantization feature vectors to a transformation model to obtain a target index corresponding to the masked region.

In an embodiment, the prediction module 903 is further configured to determine, in a discrete hidden space, the second quantization feature vector corresponding to the target index, the discrete hidden space includes linear combinations of the first quantization feature vectors;

the transformation model being a machine learning model used for determining an index corresponding to the masked region of the target video.

In an embodiment, the prediction module 903 is further configured to: input the first quantization feature vectors to the transformation model to obtain a plurality of index feature vectors; calculate a correlation value between the second video feature vector and each of the plurality of index feature vectors.

In an embodiment, the prediction module 903 is further configured to take an index corresponding to an index feature vector having a largest correlation value, as the target index.

In an embodiment, the feature extraction module 901 is further configured to: multiply the target video with the video mask to obtain a masked video; and extract, from the masked video, the first video feature vectors and the second video feature vector.

In an embodiment, the prediction module 903 is further configured to: determine spatial position offsets between any two of the first quantization feature vectors; determine a position distribution according to the spatial position offsets; generate, by using the transformation model, the plurality of index feature vectors according to the position distribution.

In an embodiment, the quantization module 902 is further configured to for each of the first video feature vectors, determine distances between the each first video feature vector and each of quantization feature vectors included in the video codebook; determine a quantization feature vector having a distance satisfying a distance condition as the first quantization feature vector;

the video codebook including the quantization feature vectors corresponding to a plurality of videos.

In an embodiment, the apparatus further includes an update module, configured to calculate a loss value of the encoding model based on the first video feature vectors and the second video feature vector; and update model parameters of the encoding model according to the loss value.

In an embodiment, the update module is further configured to: calculate a loss value of the decoding model based on the first quantization feature vectors and the second quantization feature vector; and update model parameters of the decoding model according to the loss value.

In an embodiment, the update module is further configured to: calculate a timing residual based on the second quantization feature vector and an second quantization feature vector of an adjacent image frame in the target video; update the second quantization feature vector according to the timing residual to obtain an updated second quantization feature vector.

In an embodiment, the decoding module 904 is further configured to transform the updated second quantization feature vector and the first quantization feature vectors to obtain the reconstructed video.

FIG. 10 is a structural block diagram of a computer device 1000 provided by an exemplary embodiment of this disclosure. The computer device can be implemented as the server in the above solution of this disclosure. The computer device 1000 includes a central processing unit (CPU) 1001, a system memory 1004 including a random access memory (RAM) 1002 and a read-only memory (ROM) 1003, and a system bus 1005 connecting the system memory 1004 to the CPU 1001. The computer device 1000 further includes a mass storage device 1006 configured to store an operating system 1009, applications 1010, and other program modules 1011.

The mass storage device 1006 is connected to the CPU 1001 by using a mass storage controller (not shown) connected to the system bus 1005. The mass storage device 1006 and a computer-readable medium associated with the mass storage device provide non-volatile storage for the computer device 1000. That is, the mass storage device 1006 may include a computer-readable medium (not shown) such as a hard disk or a compact disc ROM (CD-ROM) drive.

In general, the computer-readable medium may include a non-transitory computer-readable storage medium and a communication medium. The non-transitory computer-readable storage medium includes volatile and non-volatile media, and removable and non-removable media implemented by using any method or technology used for storing information such as computer-readable instructions, data structures, program modules, or other data. The non-transitory computer-readable storage medium includes a RAM, a ROM, an erasable programmable ROM (EPROM), an electrically erasable programmable ROM (EEPROM), a flash memory or another solid-state storage, a CD-ROM, a digital versatile disc (DVD) or another optical storage, a tape cartridge, a magnetic cassette, a magnetic disk storage, or another magnetic storage device. Certainly, a person skilled in the art may learn that the non-transitory computer-readable storage medium is not limited to the foregoing several types. The system memory 1004 and the mass storage device 1006 described above may be referred to collectively as memory.

According to the various embodiments of this disclosure, the computer device 1000 may further be connected, through a network such as the Internet, to a remote computer on the network and run. That is, the computer device 1000 may be connected to a network 1008 by using a network interface unit 1007 connected to the system bus 1005, or may be connected to another type of network or a remote computer system (not shown) by using a network interface unit 1007.

The memory also includes at least one computer-readable instruction stored in the memory. The CPU 1001 implements all or some of the steps in the video processing methods shown in the above embodiments by executing the at least one program.

In one embodiment, a computer-readable storage medium is provided. The computer-readable storage medium stores a computer program. The computer program, when executed by a processor, execute the steps of the above video processing method.

In one embodiment, a computer program product is provided, including a computer program. The computer program, when executed by a processor, execute the steps of the above video processing method.

It is noted that, User information (including but not limited to user device information and user personal information) and data (including but not limited to data for analysis, stored data, displayed data, and the like) involved in this disclosure are information and data authorized by a user or fully authorized by all parties, and the acquisition, use, and processing of the relevant data need to comply with relevant laws, regulations, and standards of relevant countries and regions. The various technical features in the foregoing embodiments may be randomly combined. For concise description, not all possible combinations of the various technical features in the above embodiments are described. However, provided that combinations of these technical features do not conflict with each other, the combinations of the various technical features are considered as falling within the scope of this specification.

The foregoing embodiments merely express several implementations of this disclosure. The descriptions thereof are relatively specific and detailed, but are not understood as limitations on the scope of this disclosure. A person of ordinary skill in the art can also make several transformations and improvements without departing from the idea of this disclosure. These transformations and improvements fall within the protection scope of this disclosure. Therefore, the protection scope of the patent of this disclosure shall be subject to the appended claims.

**Claims**

1. A video processing method, executable by a computer device and comprising:

   determining a target video and a video mask, the video mask being used for masking the target video to obtain a masked region in an image frame of the target video;
   extracting, from the image frame of the target video and the video mask, a plurality of first video feature vectors corresponding to an unmasked region and a second video feature vector corresponding to the masked region in the image frame;
   obtaining, from a video codebook, first quantization feature vectors corresponding to each of the plurality of the first video feature vectors;
   determining a second quantization feature vector based on the second video feature vector and the first quantization feature vectors, the second quantization feature vector being used for filling content in the masked region; and
   transforming the first quantization feature vectors and the second quantization feature vector to obtain a reconstructed image frame of the target video.

2. The method according to claim 1, wherein the determining a second quantization feature vector based on the second video feature vector and the first quantization feature vectors comprises:

   inputting the second video feature vector and the first quantization feature vectors to a transformation model to obtain a target index corresponding to the masked region; and
   determining, in a discrete hidden space, the second quantization feature vector corresponding to the target index, the discrete hidden space includes linear combinations of the first quantization feature vectors;
   the transformation model being a machine learning model used for determining an index corresponding to the masked region of the target video.

3. The method according to claim 2, wherein the inputting the second video feature vector and the first quantization feature vectors to a transformation model to obtain a target index corresponding to the masked region comprises:

   inputting the first quantization feature vectors to the transformation model to obtain a plurality of index feature vectors;

calculating a correlation value between the second video feature vector and each of the plurality of index feature vectors; and

taking an index corresponding to an index feature vector having a largest correlation value, as the target index.

4. The method according to any one of claims 1 to 3, wherein the extracting, from the image frame of the target video and the video mask, a plurality of first video feature vectors corresponding to an unmasked region and a second video feature vector corresponding to the masked region in the image frame comprises:

multiplying the target video with the video mask to obtain a masked video;

extracting, from the masked video, the first video feature vectors and the second video feature vector.

5. The method according to any one of claims 1 to 3, wherein the inputting the first quantization feature vectors to the transformation model to obtain a plurality of index feature vectors comprises:

determining spatial position offsets between any two of the first quantization feature vectors;

determining a position distribution according to the spatial position offsets;

generating, by using the transformation model, the plurality of index feature vectors according to the position distribution.

6. The method according to any one of claims 1 to 5, wherein the obtaining, from a video codebook, first quantization feature vectors corresponding to each of the plurality of the first video feature vectors comprises:

for each of the first video feature vectors,

determining distances between the each first video feature vector and each of quantization feature vectors included in the video codebook;

determining a quantization feature vector having a distance satisfying a distance condition as the first quantization feature vector;

the video codebook comprising the quantization feature vectors corresponding to a plurality of videos.

7. The method according to claim 6, wherein an encoding model is used for extracting the first video feature vectors and the second video feature vector, and the method further comprises:

calculating a loss value of the encoding model based on the first video feature vectors and the second video feature vector; and

updating model parameters of the encoding model according to the loss value.

8. The method according to claim 6, wherein an decoding model is used for transforming the first quantization feature vectors and the second quantization feature vector to obtain the reconstructed video, and the method further comprises:

calculating a loss value of the decoding model based on the first quantization feature vectors and the second quantization feature vector; and

updating model parameters of the decoding model according to the loss value.

9. The method according to any one of claims 1 to 5, wherein further comprising:

calculating a timing residual based on the second quantization feature vector and an second quantization feature vector of an adjacent image frame in the target video;

updating the second quantization feature vector according to the timing residual to obtain an updated second quantization feature vector; and

the transforming the first quantization feature vectors and the second quantization feature vector to obtain a reconstructed video comprises:

transforming the updated second quantization feature vector and the first quantization feature vectors to obtain the reconstructed video.

10. The method according to any one of claims 1 to 5, wherein an encoding model is used for extracting the first video feature vectors and the second video feature vector, an decoding model is used for transforming the first quantization feature vectors and the second quantization feature vector to obtain the reconstructed video, and the encoding model and the decoding model are trained through following steps:

obtaining a target video sample, a video mask sample, and an incomplete-video sample, obtaining a masked video sample based on the target video sample and the video mask sample, and inputting the masked video sample to the encoding model to extract first video feature vectors and a second video feature vector in a training process;

for each of the first video feature vectors in a training process, determining, from the video codebook according to distances between the each first video feature vector in the training process and each of quantization feature vectors included in the video codebook, a first quantization feature vector having a minimum distance;

inputting the determined first quantization feature vectors to the decoding model to obtain an incomplete video;

calculating loss values of the encoding model and the decoding model, based on an error between the incomplete video and the incomplete-video sample, the first video feature vectors, and the first quantization feature vectors;

adjusting model parameters of the encoding model and the decoding model according to the calculated loss values, to obtain a trained encoding model and a trained decoding model.

11. The method according to any one of claims 1 to 5, wherein the transformation model is trained through following steps:

obtaining a target video sample, a video mask sample, and a reconstructed video sample, multiplying the target video sample with the video mask sample to obtain a masked video sample, and extracting, from the masked video sample, a first video feature vectors and a second video feature vector in a training process;

obtaining, from the video codebook, first quantization feature vectors corresponding to each of the plurality of first video feature vectors in the training process;

inputting the second video feature vector and the first quantization feature vectors in the training process to the transformation model to obtain a target index corresponding to the masked region in the training process;

determining, according to the target index in the training process, a second quantization feature vector corresponding to the target index in the training process;

transforming the obtained first quantization feature vectors and the second quantization feature vector to obtain a reconstructed video;

calculating a loss value of the transformation model based on an error between the reconstructed video and the reconstructed video sample, the first video feature vectors and the first quantization feature vectors in the training process;

adjusting model parameters of the transformation model according to the calculated loss value, to obtain a trained transformation model.

12. A video processing apparatus, comprising:

a feature extraction module, configured to: determine a target video and a video mask, the video mask being used for masking the target video to obtain a masked region in an image frame of the target video; extract, from the image frame of the target video and the video mask, a plurality of first video feature vectors corresponding to an unmasked region and a second video feature vector corresponding to the masked region in the image frame;

a quantization module, configured to: obtain, from a video codebook, first quantization feature vectors corresponding to each of the plurality of the first video feature vectors;

a prediction module, configured to determine a second quantization feature vector based on the second video feature vector and the first quantization feature vectors, the second quantization feature vector being used for filling content in the masked region; and

a decoding module, configured to transform the first quantization feature vectors and the second quantization feature vector to obtain a reconstructed image frame of the target video.

13. The apparatus according to claim 12, wherein the prediction module comprises:

a first prediction unit, configured to input the second video feature vector and the first quantization feature vectors to a transformation model to obtain a target index corresponding to the masked region; and

a second prediction unit, configured to determine, in a discrete hidden space, the second quantization feature vector corresponding to the target index, the discrete hidden space includes linear combinations of the first quantization feature vectors;

the transformation model being a machine learning model used for determining an index corresponding to the masked region of the target video.

14. The apparatus according to claim 13, wherein

   the first prediction unit is further configured to: input the first quantization feature vectors to the transformation model to obtain a plurality of index feature vectors; calculate a correlation value between the second video feature vector and each of the plurality of index feature vectors; and
   the first prediction unit is further configured to take an index corresponding to an index feature vector having a largest correlation value, as the target index.

15. The apparatus according to any one of claims 12 to 14, wherein
   the feature extraction module is further configured to multiply the target video with the video mask to obtain a masked video; and extract, from the masked video, the first video feature vectors and the second video feature vector.

16. The apparatus according to any one of claims 12 to 14, wherein
   the prediction module is further configured to: determine spatial position offsets between any two of the first quantization feature vectors; determine a position distribution according to the spatial position offsets; generate, by using the transformation model, the plurality of index feature vectors according to the position distribution.

17. The apparatus according to any one of claims 12 to 16, wherein

   the quantization module is further configured to for each of the first video feature vectors, determine distances between the each first video feature vector and each of quantization feature vectors included in the video codebook; determine a quantization feature vector having a distance satisfying a distance condition as the first quantization feature vector;
   the video codebook comprising the quantization feature vectors corresponding to a plurality of videos.

18. A computer device, comprising a memory and a processor, the memory storing computer-readable instructions, and the processor executing the computer-readable instructions to implement the steps of the method according to any one of claims 1 to 11.

19. A computer-readable storage medium, storing computer-readable instructions, the computer-readable instructions, when being executed by a processor, implementing the steps of the method according to any one of claims 1 to 11.

20. A computer program product, comprising computer-readable instructions, the computer-readable instructions, when being executed by a processor, implementing the steps of the method according to any one of claims 1 to 11.

FIG. 1

Determine a target video and a video mask, the video mask being used for masking the target video to obtain a masked region in an image frame of the target video; extract, from the image frame of the target video and the video mask, a plurality of first video feature vectors corresponding to an unmasked region and a second video feature vector corresponding to the masked region in the image frame — 202

Obtain, from a video codebook, first quantization feature vectors corresponding to each of the plurality of the first video feature vectors — 204

Determine a second quantization feature vector based on the second video feature vector and the first quantization feature vectors — 206

Transform the first quantization feature vectors and the second quantization feature vector to obtain a reconstructed image frame of the target video — 208

FIG. 2

Determine a target video and a video mask, the video mask being used for masking the target video to obtain a masked region in an image frame of the target video; extract, from the image frame of the target video and the video mask, a plurality of first video feature vectors corresponding to an unmasked region and a second video feature vector corresponding to the masked region in the image frame
302

Obtain, from a video codebook, first quantization feature vectors corresponding to each of the plurality of the first video feature vectors, and determine an index distribution of the first quantization feature vectors in a discrete hidden space formed based on the first quantization feature vectors
304

Input the second video feature vector and the first quantization feature vectors to a transformation model to obtain a target index corresponding to the masked region
306

Determine, in the discrete hidden space, the second quantization feature vector corresponding to the target index
308

Input the first quantization feature vectors and the second quantization feature vector to the decoding model to obtain a reconstructed video
310

FIG. 3

Discrete hidden space
402

First quantization feature vector and a second quantization feature vector

Encoding model
401

First video feature vector, second video feature vector

Second video feature vector and index distribution

Transformation model
403

Decoding model
404

FIG. 4

FIG. 5

Determine a target video and a video mask, and extract, from the image frame of the target video and the video mask, a plurality of first video feature vectors corresponding to an unmasked region and a second video feature vector corresponding to the masked region in the image frame 602

Determine, in a video codebook according to the first video feature vectors, a discrete hidden space related to the target video 604

## FIG. 6

Video codebook (Quantization feature vector) 702

Encoding model 701

First video feature vector

First quantization feature vector

Decoding model 703

## FIG. 7

Construct a discrete hidden space 801

Determine a second quantization feature vector 802

Quantize a first video feature vector 801a

Determine a discrete hidden space 801b

Input to a transformation model 802a

Calculate a correlation value 802b

Determine a target index 802c

## FIG. 8

Feature extraction
module    901

Quantization
module    902

Prediction module    903

Decoding module    904

## FIG. 9

1000

1008

Network

1001

1007

Central
processing unit

Network interface
unit

1005

System bus

1004    1002

1006

Random access
memory

Operating
system   1009

Read-only
memory

Applications   1010   Mass storage device

System
memory   1003

Other program
modules   1011

## FIG. 10

## INTERNATIONAL SEARCH REPORT

| | International application No. |
|---|---|
| | **PCT/CN2022/131919** |

**A. CLASSIFICATION OF SUBJECT MATTER**

H04N21/44(2011.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT: 视频, 掩码, 掩膜, 掩模, 模型, 特征, 向量, 离散, 二值, 量化, 索引, 位置, 重构, 填补, 遮挡, 人工智能, video, mask, model, feature, vector, discrete, binarization, position, index, reconstruction, fill, hide, AI

**C. DOCUMENTS CONSIDERED TO BE RELEVANT**

| Category* | Citation of document, with indication, where appropriate, of the relevant passages | Relevant to claim No. |
|---|---|---|
| PX | CN 114449345 A (TENCENT TECHNOLOGY (SHENZHEN) CO., LTD.) 06 May 2022 (2022-05-06) claims 1-15, description, paragraphs [0070]-[0200], and figures 1-10 | 1-20 |
| Y | CN 113705290 A (TENCENT TECHNOLOGY (SHENZHEN) CO., LTD.) 26 November 2021 (2021-11-26) description, paragraphs [0043]-[0212], and figures 1-10 | 1, 4-8, 12, 15-20 |
| Y | CN 111368133 A (TENCENT TECHNOLOGY (SHENZHEN) CO., LTD.) 03 July 2020 (2020-07-03) description, paragraphs [0078]-[0232], and figures 1-7 | 1, 4-8, 12, 15-20 |
| A | CN 112733794 A (TENCENT TECHNOLOGY (SHENZHEN) CO., LTD.) 30 April 2021 (2021-04-30) entire document | 1-20 |
| A | CN 110728330 A (TENCENT TECHNOLOGY (SHENZHEN) CO., LTD.) 24 January 2020 (2020-01-24) entire document | 1-20 |

☑ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2023** | **15 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/131919**

**C.    DOCUMENTS CONSIDERED TO BE RELEVANT**

| Category* | Citation of document, with indication, where appropriate, of the relevant passages | Relevant to claim No. |
|---|---|---|
| A | WO 2021135499 A1 (PING AN TECHNOLOGY (SHENZHEN) CO., LTD.) 08 July 2021 (2021-07-08) entire document | 1-20 |
| A | WO 2020192704 A1 (TENCENT TECHNOLOGY (SHENZHEN) CO., LTD.) 01 October 2020 (2020-10-01) entire document | 1-20 |

INTERNATIONAL SEARCH REPORT
Information on patent family members

International application No.

**PCT/CN2022/131919**

| Patent document cited in search report | | | Publication date (day/month/year) | Patent family member(s) | | | Publication date (day/month/year) |
|---|---|---|---|---|---|---|---|
| CN | 114449345 | A | 06 May 2022 | None | | | |
| CN | 113705290 | A | 26 November 2021 | None | | | |
| CN | 111368133 | A | 03 July 2020 | None | | | |
| CN | 112733794 | A | 30 April 2021 | None | | | |
| CN | 110728330 | A | 24 January 2020 | US | 2022058426 | A1 | 24 February 2022 |
| | | | | WO | 2021077984 | A1 | 29 April 2021 |
| WO | 2021135499 | A1 | 08 July 2021 | None | | | |
| WO | 2020192704 | A1 | 01 October 2020 | US | 2021264655 | A1 | 26 August 2021 |

Form PCT/ISA/210 (patent family annex) (July 2022)

**REFERENCES CITED IN THE DESCRIPTION**

**Patent documents cited in the description**

- CN 2022101185245